# EUROPEAN PATENT SPECIFICATION

(11) **EP 1 636 519 B1**
(45) Date of publication and mention of the grant of the patent: **29.09.2010**
(21) Application number: 04748741.8
(22) Date of filing: 04.06.2004
(51) Int. Cl.: F16K 3/02

(54) **GATE VALVE**
ABSPERRSCHIEBER
ROBINET-VANNE

(30) Priority: 06.06.2003 NO 20032583
(43) Date of publication of application: 22.03.2006
(60) Divisional application: 10163906.0
(73) Proprietor: Kongsberg Esco AS, 3612 Kongsberg (NO)
(72) Inventor: SYVERTSEN, Jørn, 3618 Skollenborg (NO)
(74) Representative: Inspicos A/S
(86) International application number: PCT/NO2004/000160
(87) International publication number: WO 2004/109165

(56) References cited:
- EP-A2- 0 926 410
- WO-A1-02/77504

## Description

The invention relates to a gate valve having a body comprising a first part, a second part, and inlet- and outlet parts, wherein said first and second parts defining a cavity in said body in fluid connection with respective openings in the inlet- and outlet parts, and where a wedge is movable in said body, into the cavity for forming a barrier between the inlet- and outlet parts, thereby preventing fluid flow through the body, and out of said cavity for allowing said fluid flow.

### Background art

A gate valve of the above mentioned type is known from e.g. US 2,934,313 and WO-A-02/077504, the latter filed by the applicant. In the known gate valves, the wedge is typically guided by an insert disposed in the valve body. Use of guiding paths in a gate valve is a common technical solution in metal seated gate valves as well as in resilient seated gate valves. Use of guiding paths in combination with low friction guiding areas on the wedge is well known, e.g. in European patent application EP 0 926 410 A2.

In the known gate valves, the valve housing is either cast in one piece with continuous guide paths, or the valve housing is two-part design, and the guide paths extend down to this separation or are totally absent. Such absence of guide paths or discontinuity of guide paths will affect the guidance of the wedge and/or increase the wear on the corresponding areas on the wedge.

There is also a risk of misalignment during assembly of valve's upper part and bottom parts, with a potential reduced quality and performance of the guiding paths during operation. These adverse factors contribute to reducing the useful life time for such gate valve.

It is therefore a need for a gate valve having reliable guide paths, thus easing assembly and improving operation of the gate valve.

A gate valve sealing insert needs to have a certain strength and rigidity in order to fulfil its intended purpose. Regulations stipulate that potable water should only be exposed to certain materials, which are selected focusing on health issues and not on material properties like strength and rigidity. Thus achieving the necessary strength and rigidity in the sealing insert, while at the same time complying with the relevant health regulations, is a problem.

### Disclosure and summary of the invention

The present invention solves that need, by providing a valve as specified in claims 1 and 2.

Preferred embodiments of the gate valve according to the invention are disclosed in dependent claims 3 - 11.

An innovative feature is thus the use of guiding paths in a resilient seated gate valve where the valve body is divided in an upper part, a bottom part, an inlet part, and an outlet part, and that the guiding paths have been extended from the upper part down into the bottom part below the centreline of the valve. This will ensure a better performance of the guiding of the wedge in closed position, and also prevent a split in the guiding path that will increase the wear on the corresponding areas on the wedge. It also prevents a possible mismatch and a reduction of quality of the guiding paths during assembly of upper part and bottom part. In total, this will ensure an optimum quality of the guiding paths, less wear, and a longer lifetime for the valve. In one embodiment, the guide path area in the upper part is extended as two teeth or as a profile, and a corresponding pocket or groove is cast in the bottom part.

An alternative solution is to cast a separate guiding area in the upper part and the bottom part, and connect these two areas by insertion of a continuous guiding path in a low friction material during assembly. The benefit would be a more simplified casting geometry and a possibility of replacing the guiding paths, and the use of different material in the guiding paths for different applications.

As an alternative to using an insert, the valve could be made with the sealing integrated in a rubber coated bottom part, i.e. the bottom part and the sealing insert are essentially combined into one unit. The rubber coated bottom part could then fully replace the need of an insert.

Such bottom cover could for example be made in a cast iron grade and fully rubber coated. The rubber coating would be able to calibrate the grooves for the coupling area as well as an epoxy protection film for the inlet part and the outlet part as well as a total corrosion protection for the bottom cover. This design would be a great benefit since it would save an epoxy coating process of the bottom cover, and tooling for an insert item. The assembly process would also be easier with lower number of parts.

It would be a great benefit if the bottom cover with the sealing integrated, could be made in a corrosion free material, e.g. stainless steel, and the rubber coating could be limited to the area of wedge sealing, coupling sealing and gasket. By using a high quality casting process, the coupling area could be made with an optimum accuracy without machining.

It would be of a great benefit if both the upper part and the bottom part could be made in a corrosion free material, such as stainless steel, e.g. in an investment casting process. This would enhance the quality and accuracy of the grooves in the coupling area. It would also be a benefit to the environment to avoid the epoxy coating process. To avoid galvanic corrosion problems to the pipeline systems due to a to noble gate valve, the inlet part and the outlet part could still be made in an epoxy coated cast iron grade. The total accuracy in the coupling area would be increased, and the epoxy coating would act as an insulator toward the rest of the pipeline system.

The inlet part and the outlet part could be insulated from metallic contact with the upper part and the bottom part also by other surface treatment, such as a plastic material.

In the gate valve, the coupling area shall connect the upper part, the bottom part, the inlet part, and the outlet part, and secure the necessary strength and tightness to the total valve.

To take care of the casting tolerances and the surface treatment tolerances (normally epoxy coating), and to protect the surface treatment, an insert could be included into the connection area. Such insert could be initially oversized to adapt the valve body parts and create a rigid coupling. The groove in the upper part and the bottom part could have a larger angle on the outer side to create an axial movement for the inlet part and the outlet part against the insert during assembly. Any deformations during the assembly process would then take place at the insert and not to the surface treatment of the valve body.

There is an important benefit of having a certain deformation of the insert skeleton ring due to the friction against the inlet part and outlet part after assembly. The deformation and friction created will ensure the inlet part and outlet part to become a rigid part of the total valve, and prevent rotational movement of the inlet part and outlet part.

To create a more controlled deformation of the insert skeleton ring, it would be preferable to make some deformation zones in the surface of the insert skeleton ring. This could be made by adding some grooves to the surface.

To ensure an easy assembly process of upper part, bottom part, inlet part and outlet part, and to ensure that inlet part and outlet part gets the optimum axial movement against the insert skeleton ring, the groove in upper part and bottom part could be equipped with a low friction ring. This low friction ring will then protect the surface coating of the valve body parts. This low friction ring could also be placed on the corresponding flange of the inlet part and outlet part.

The low friction ring could be replaced with use of a special lubrication in the connection area to achieve the same functionality.

A benefit of placing the low friction ring in the groove of the upper part and the bottom part, would be the possibility of calibrating these grooves before the assembly process. The casting tolerances in the grooves in the upper part and the bottom part would then be better controlled by this calibration process. The calibration process could be done by a melting process using a fixed tool.

The insert skeleton ring in the coupling area could be made of a polymer material with glass fibre reinforcement. The polymer-material could be a Polyamide material or a Polyester based material.

The insert geometry could be made such that the sealing surfaces against the upper part and the bottom part is made as a static sealing formed during the assembly process. The sealing against the inlet part and the outlet part could be made as a combined sealing with a vacuum proof sealing, and a hydraulic sealing to ensure an optimum sealing during a bending situation in the pipeline.

The insert geometry could be made such that any contact between the drinking water in the valve and the insert skeleton ring, not protected by any rubber coating, is avoided. The insert skeleton could then be made in a lot of different materials without requested drinking water approvals. Also lubrication in the coupling area, or use of a low friction ring could be chosen without need of drinking water approvals.

It is a great benefit that the insert can be made without a total rubber coating, like in the area of the insert skeleton ring used in the coupling area of the valve. The insert skeleton ring could then be used as an important positioning surface of the insert skeleton during the rubber coating process to achieve an optimum result of the final insert.

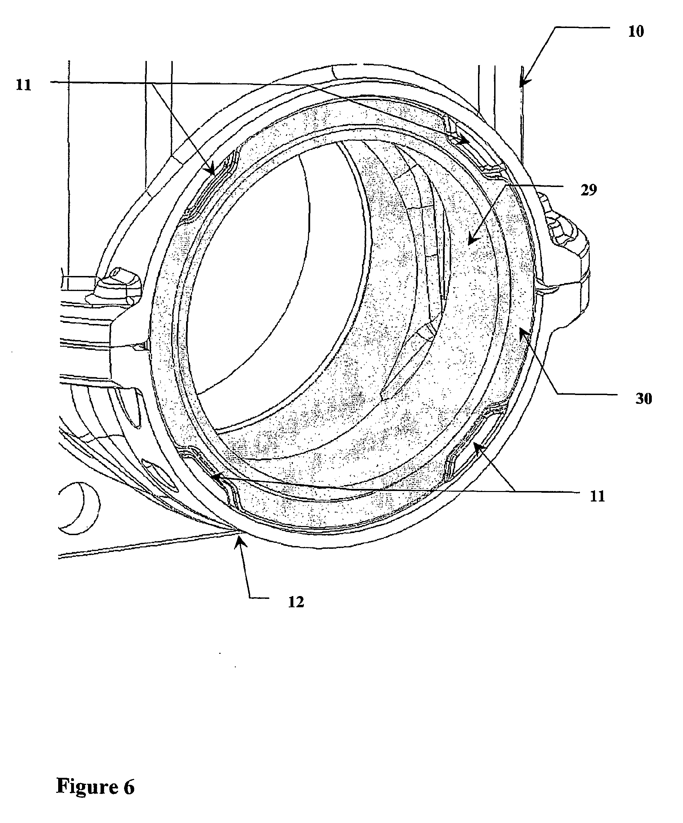

The insert skeleton ring could be made with some pocket areas to fit some corresponding safety knobs in the upper part and the bottom part, see fig. 6. These safety knobs will be included in the geometry of the upper part and the bottom part and formed during the casting process. The safety knobs will be able to act as an extra safety to the connection to prevent damages to the insert skeleton ring due to a bending or pushing overload situation in the pipeline during the lifetime of the valve.

In a different design, the coupling area could be designed with a groove in the inlet part and the outlet part, and a corresponding geometry in the upper part and the lower part. This design separates the mechanical coupling area from the coupling sealing area. By using a Victaulic type coupling design, almost like in EP 0291331, it is possible to achieve a high mechanical strength and a rigid design, using a simple geometry.

It is a great benefit using a simple Victaulic type coupling design, since the upper part and lower part can easily be machined in this area, together with inlet part, and outlet part, to achieve a high accuracy.
It is a great benefit to avoid machining of the Victaulic type coupling design area of the lower part, and use lower part as a clamping part to achieve a rigid design.

To compensate for casting tolerances of lower part, and thickness tolerances of corrosion protection coating (i.e. epoxy), the insert could have a thin rubber film to be placed in the Victaulic type coupling area. This rubber film will ensure a high friction to the inlet part and the outlet part against the upper part and the lower part, and avoid possible rotation of inlet part and outlet part. By separating the mechanical coupling area, and the coupling sealing area, the thin rubber film may be squeezed, and ruptured, without creating any leakage.

By performing a machining process to the upper part, inlet part and outlet part, and add a thin rubber film into the groove of the Victaulic type coupling area, the tolerances due to casting and surface coating can be controlled. This is important to achieve a rigid coupling, and to control the compression to the gasket between upper part and lower part.

The description refers to a resilient gate valve with an upper part, a bottom part, an inlet part, and an outlet part, like described in WO 02/077504 A1. When using an insert to connect inlet part and outlet part during assembly, or by using a rubber coated bottom part, the wedge can be made in an epoxy coated cast iron grade, or in a corrosion free material, such as stainless steel. Since the wedge is no longer rubber coated, the sealing functionality in fully open position when repacking the valve under pressure is no longer preset. This could be made possible, by extending the wedge nut above the wedge, and add a wedge nut sealing ring.

The valve top represents a total new high quality design, including high strength, low friction and high corrosion resistant. The valve top design includes a lot of features to reduce the number of parts and give an optimised assembly process.

To ensure a high strength, the core part of the valve top is made in stainless steel. To reduce the number of parts, the stainless steel core could have a polymer coating (i.e. POM) to include a dust seal on the top, a bearing surface for the stem, and a polymer protection film below the bolts to avoid metallic contact with the stainless steel core. This polymer protection film creates a larger flexibility in bolt material selection without creating any galvanic corrosion problems.

By using a polymer protection film, the stainless steel core could be made as a raw casting part at a low price, and still the final design would obtain a nice finish.

It is a great benefit if the polymer material coating has a total adhesion to the stainless steel core.

An embodiment of the invention will now be described in more detail, with reference to accompanying drawings, where like parts have been given like reference numbers.
Figure 1 is an exploded view of one embodiment of the gate valve according to the invention,
Figure 2 is an exploded view of the gate valve of figure 1, but showing only the upper and lower parts and also disclosing the guiding paths,
Figure 3 is a partial section through the upper and lower parts of the gate valve according to the invention,
Figure 4 is a partial section through a gate valve according to the invention, showing also the removable guiding paths in place in the corresponding grooves and extending down into and overlapping the valve lower or bottom part,
Figure 5 is a partial section through the insert rubber gasket, the upper valve part, and the inlet/outlet part, illustrating the various sealing areas for one embodiment of the present invention,
Figure 6 is a partial perspective view of the assembled upper and lower parts with the skeleton ring in place. The drawing also identifies four safety knobs,
Figure 7 is an exploded sectional view of the valve according to the invention, showing an embodiment where the bottom part of the valve comprises a resilient material, thereby essentially alleviating the need for a sealing insert,
Figure 8 is a partial section of drawing of the valve identifying the inlet/outlet part and the upper part of the valve, as well as the various coupling areas between those two parts,
Figure 9 is an exploded sectional view of the valve according to the invention, identifying the gasket between the upper and lower parts,
Figure 10 is a perspective drawing of a wedge and wedge nut, identifying also the guiding fins on both sides of the wedge,
Figure 11 is a close-up view of the upper part of the wedge shown in Figure 10,
Figure 12 is a sectional view of the valve top, identifying the polymer material coating, dust seal and bearing surface,
Figure 13 is an exploded view of the valve top and wedge shown in the previous figures, identifying particularly the core part and the polymer material coating.
Figure 14 is a partial section through an embodiment of the insert, generally similar to that shown in figure 5, but with a different configuration,
Figure 15 is a perspective view of an embodiment of a sealing insert,
Figure 16 is a perspective view of an embodiment of the skeleton ring,
Figure 17 is another perspective view of the sealing insert of figure 15, also revealing a part of the skeleton ring.

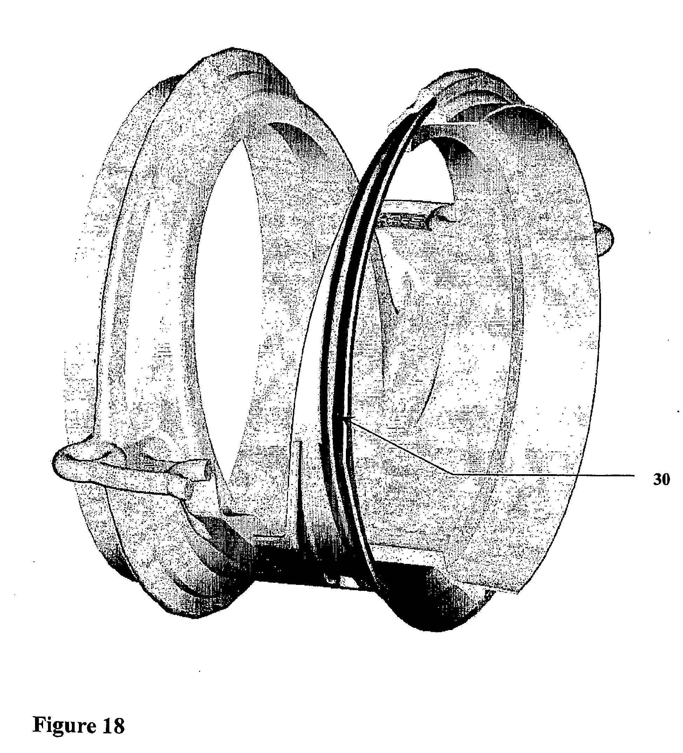

Figure 18 is a perspective view of the sealing insert with parts of the coating removed, thus exposing a part of the skeleton ring for illustration purposes.

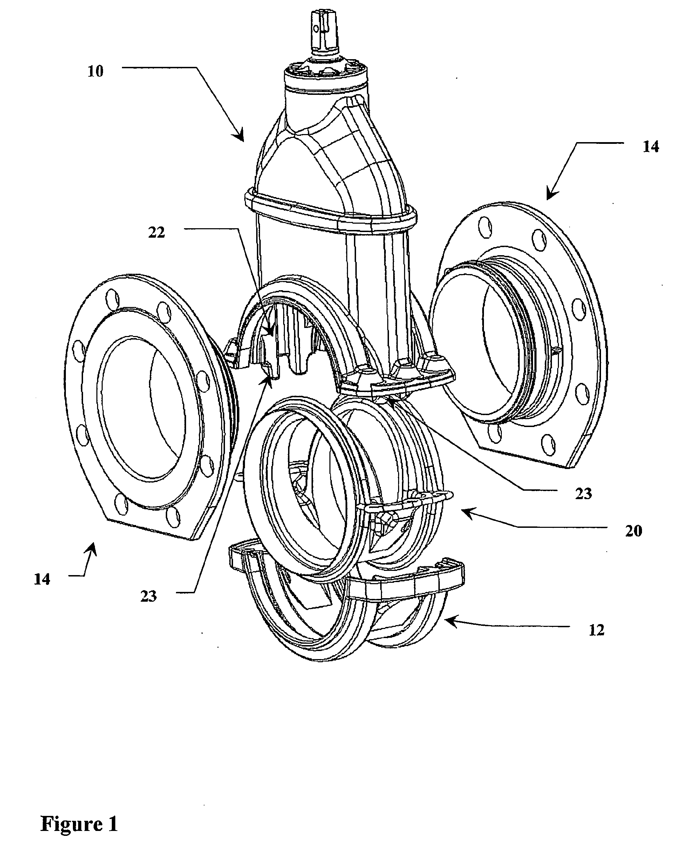

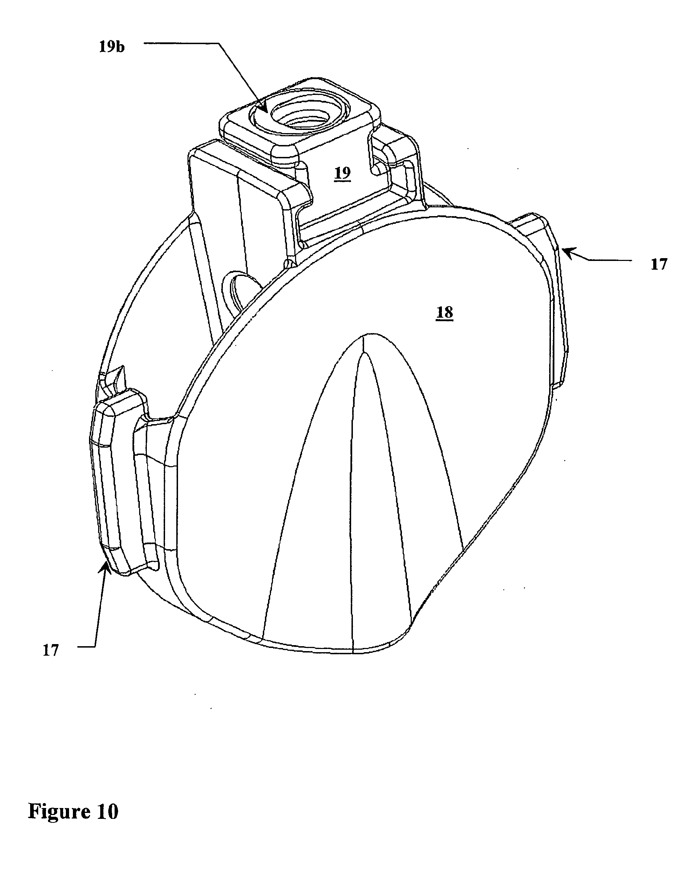

The valve comprises four basic parts: the inlet and outlet parts 14, an upper part (or first part) 10 and a lower or bottom part (second part) 12. These parts are shown in an exploded view in Figure 1. The inlet/outlet parts may be identical and are thus given the same reference number 14. Figure 1 also shows a sealing insert 20 which is placed within the valve and provides sealing against the wedge when this is in the closed position, as well as sealing against the inlet/outlet parts. The valve according to the invention also comprises a wedge or closure element 18 as shown in Figure 10. When the valve is in the open position, i.e. allowing fluid flow through the valve internal cavity, the wedge is generally withdrawn into the valve upper part 10. This is achieved in a conventional manner, i.e. by turning a stem 60.

Returning now to Figure 1, it shows that the first or upper part of the valve comprises guiding paths 22. In Figure 1 only the left hand side guiding paths are shown, and one distinct feature is that the guiding paths comprise a portion which extends beyond the first part, here identified by reference numeral 23. These guiding paths ends 23 are also shown on the right hand side of the first part.

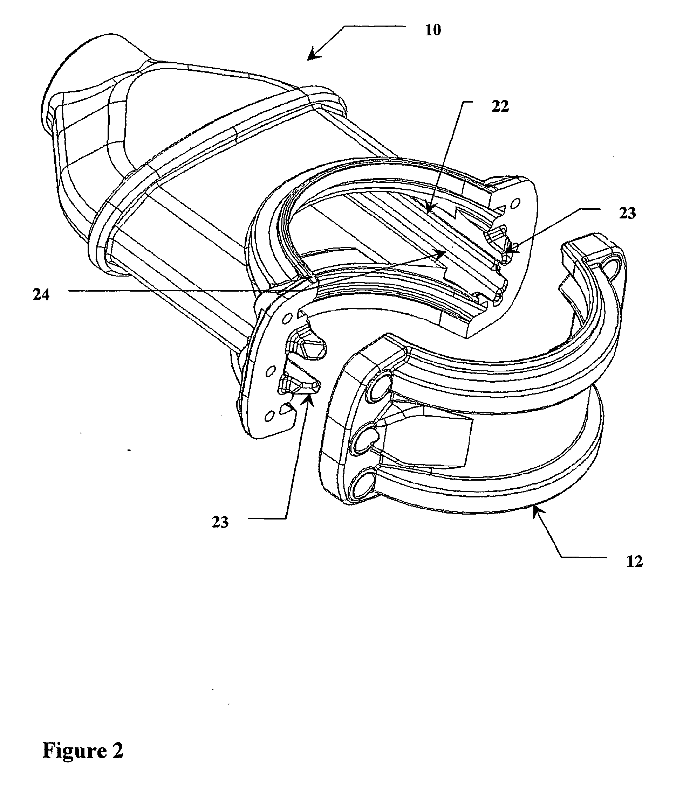

Turning now to Figure 2, these guiding paths or guiding objects 22 are shown more clearly. Both guiding paths comprise a groove or recess 24 for guiding the wedge on its sliding movement into and out of the cavity defined by the upper and lower parts of the valve. Also shown are the guiding paths ends 23, extending beyond the end of the first or upper part 10.

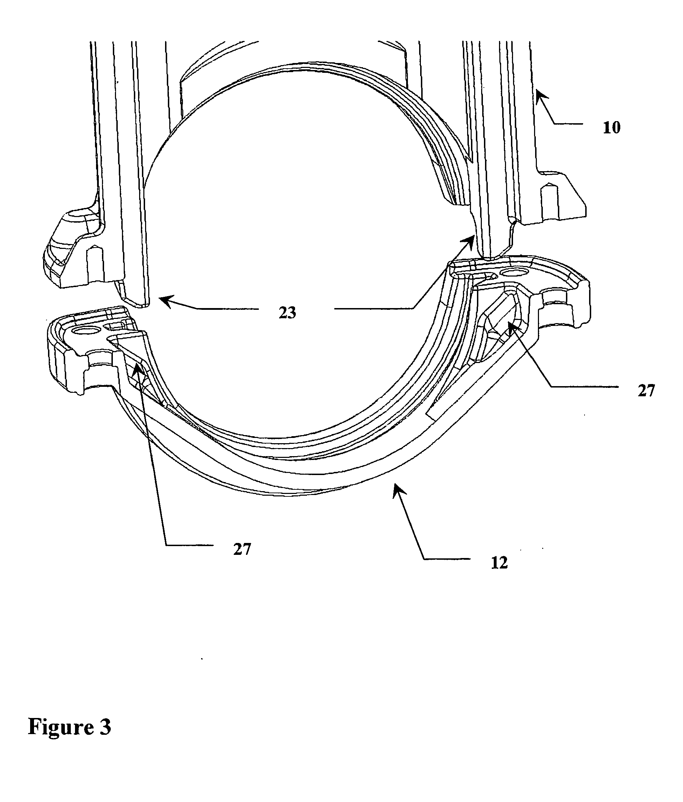

Figure 3 is a sectional drawing displaying how the ends of the guiding parts 23 will extend down into the lower part 12 when the valve is in an assembled state. The guide paths ends 23 are accommodated in corresponding grooves 27 in the second or lower part 12.

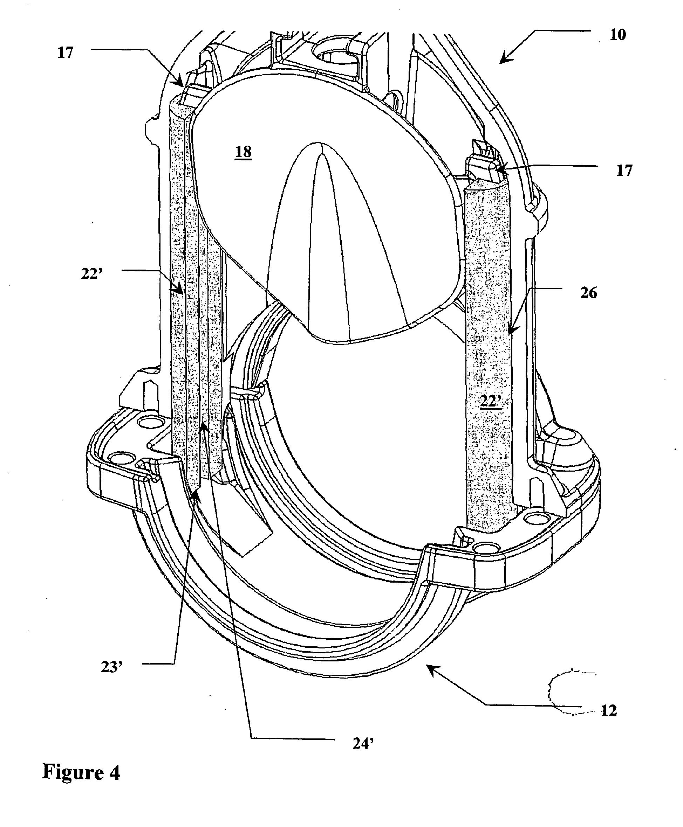

Figure 4 shows an alternative embodiment of the guiding objects 22'. Here the guiding objects 22' are releasably mounted in the valve when this is in an assembled state. Also shown in Figure 4 is the wedge 18 which is slidably disposed in the two releasable guiding objects 22', preferably by means of wedge fins 17.

In an assembled state, the first 10 and second 12 parts define a cavity in the valve body which is in fluid communication with respective openings in the inlet and outlet parts 14. The wedge will be able to move in the valve body, into this cavity for forming a barrier between the inlet and outlet parts for thereby preventing fluid flow through the body, and the wedge will also be movable out of said cavity for allowing fluid flow through the body. One inventive feature of the valve is that the at least one guiding object 22; 22' generally accommodated in the first part of the valve, a portion of which 23; 23' extending into a region of the cavity defined by a second part, thus essentially overlapping an area in the second part. The guiding objects 22; 22' will in a preferred embodiment comprise a recess 24; 24' adapted for guidance of said wedge 18. As shown in Figure 4, the guiding object 22' may be releasably connected with the valve body, preferably the first part 10. As shown in i.e. Figure 1, the guiding object 22 may also be an integral part of the valve body, notably the first part 10.

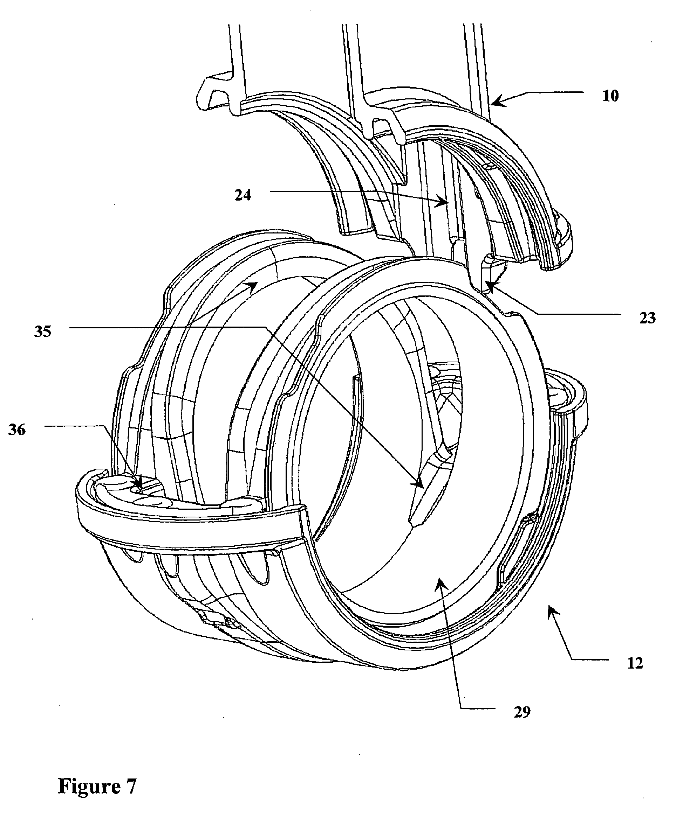

Figure 7 shows an embodiment of the valve in which the second part 12 and the sealing insert 20 are united. Here, all the sealing faces are integrated in a rubber coated bottom part. Thus, this rubber coated bottom part 12 may fully alleviate the need for an insert 20. As explained above, the bottom or second part 12 could in this embodiment be made of a cast iron grade and completely coated with a resilient material, such as rubber. The resilient material would then be able to calibrate the grooves for the coupling areas as well as epoxy protection filled for the inlet part and the outlet part, as well as a total corrosion protection for the second part. Figure 7 shows this embodiment with sealing areas 29 and wedge sealing areas 35, as well as gaskets 36.

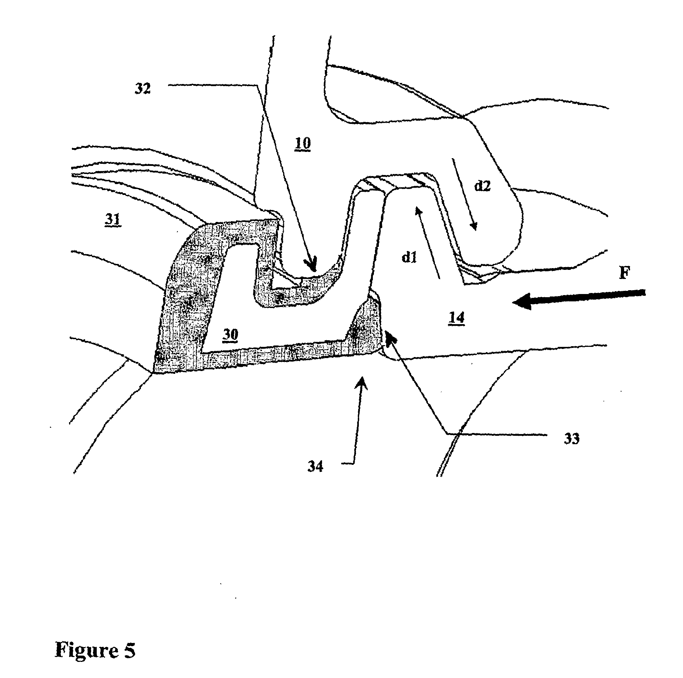

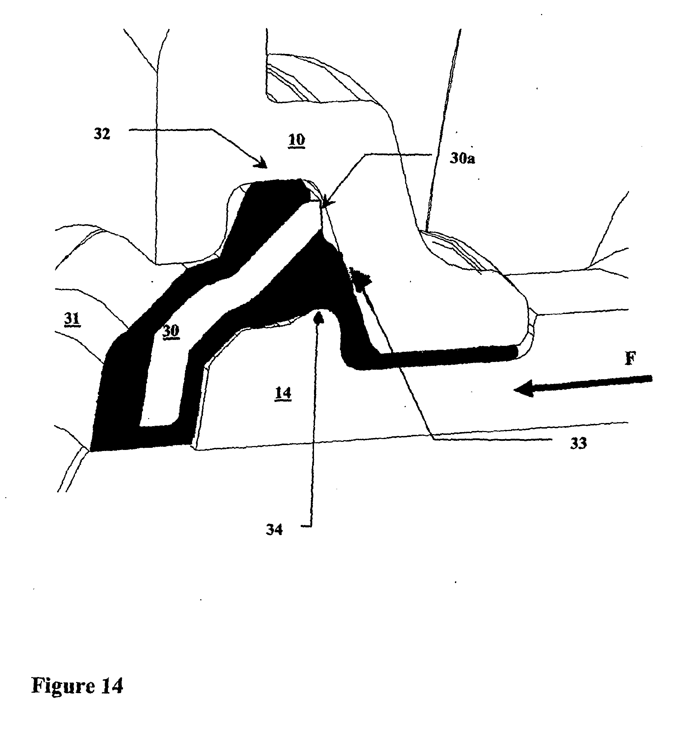

In order to connect the first part 10, second part 12 and the inlet/outlet parts 14, and to take care of any inaccuracies in the casting tolerances and the surface treatment tolerances, and to protect the surface treatment, an insert skeleton ring 30 may be included into the coupling area, as indicated in Figure 5 and Figure 14. Here, a section of the first part and the inlet/outlet part are shown, as well as an insert skeleton ring 30 which initially could be oversized to adapt to the valve body parts and create a rigid coupling. Figure 5 also shows the insert rubber gasket 31, the static sealing areas 32, the hydraulic sealing area 34, as well as a vacuum proof sealing 33. On axial loads on the inlet/outlet part 14, indicated by the force arrow F, the respective parts (10, 14) will tend to move as indicated by the arrows d1 and d2 in Figure 5. As shown in Figure 5, the groove (in the first part, and also in the second part) could have a larger angle on the outside to create this axial movement for the inlet/outlet parts against the insert skeleton during assembly. Any deformations during the assembly process would then take place at the insert skeleton ring and not on the valve body surface. Further benefits of this arrangement are explained in the introduction to this description.

As shown in Figure 6, the insert skeleton ring 30 could be made with some recessed areas to fit some corresponding safety knobs 11 in the first part and second part. These safety knobs 11 will be integral parts and formed during the casting process. These safety knobs will be able to function as an extra safety in the connection, by preventing damages to the insert skeleton ring due to any bending or pushing overloads in the pipeline during its useful lifetime.

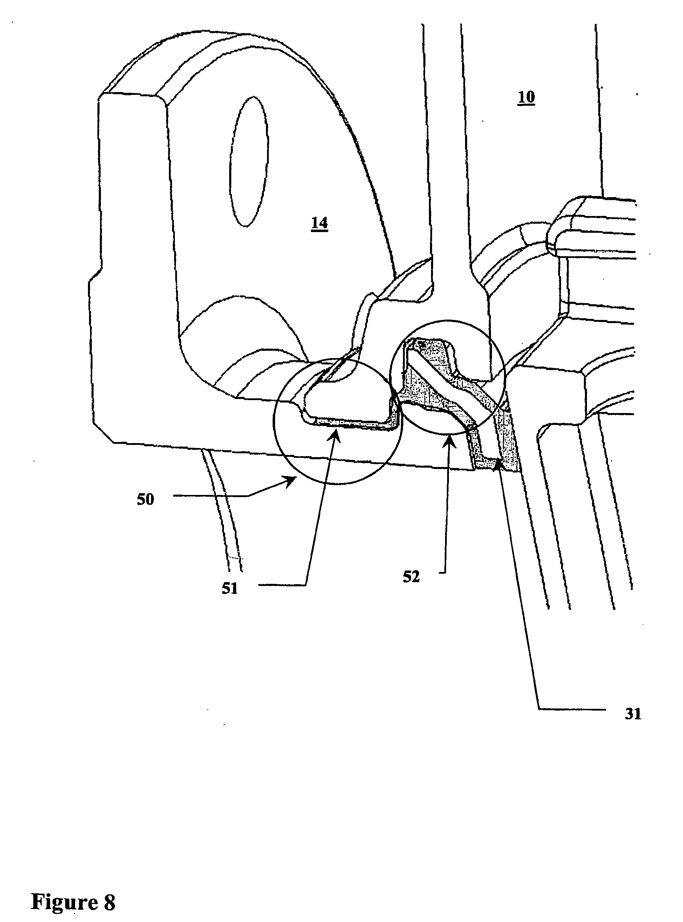

Instead of using a design as explained above (i.e. with an insert skeleton ring) the coupling area could be designed with a groove in the inlet/outlet parts 14 and a corresponding geometry in the upper part and the lower part, as indicated by the cross sectional drawing in Figure 8. Here, a coupling sealing area is encircled and indicated by reference numeral 52, whereas the mechanical coupling area is encircled and indicated by reference numeral 50. This mechanical coupling area is also known as a Victaulic type coupling. In this Victaulic type coupling, a thin rubber film 51 is indicated in Figure 8.

A feature with this design is that the mechanical coupling area 50 is separated from the coupling sealing area 52. By using such a design, it is possible to achieve a high mechanical strength and a rigid design by using a simple geometry.

As mentioned in the introduction above, it is beneficial to use a simple Victaulic type coupling design, as the first and second parts easily may be machined in this area, together with the outlet/inlet parts in order to achieve a high degree of accuracy. It is a great benefit to avoid machining of the Victaulic type coupling design area in the second part, and use the second part as a clamping part to achieve a rigid structure.

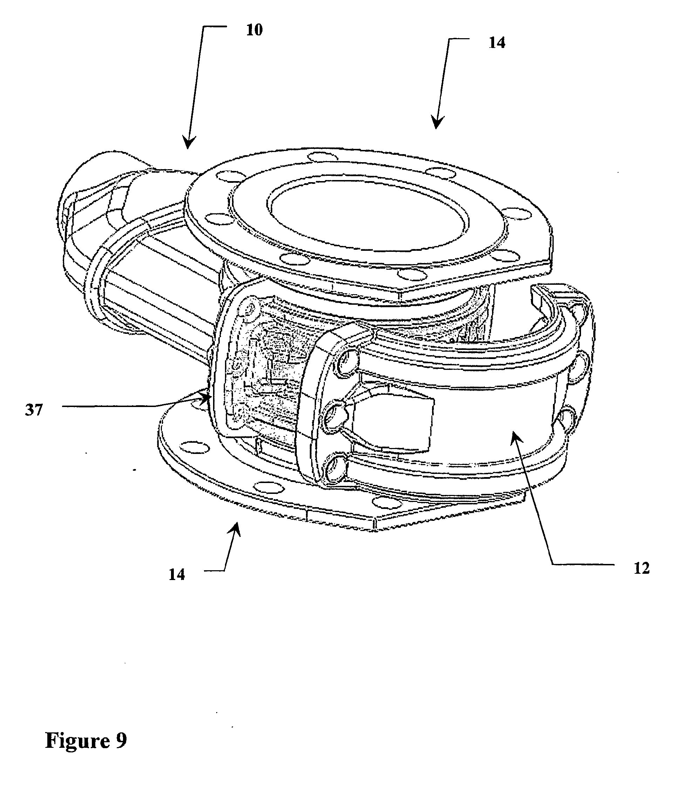

The thin rubber film 51 is placed in the mechanical coupling area to compensate for casting tolerances in the upper or lower part, and thickness tolerances of corrosion protection coating. This thin film will insure a high friction of the respective parts and prevent possible rotation of the inlet/outlet parts. By separating the mechanical coupling area from the coupling sealing area, the above mentioned thin film may be squeezed and even ruptured, without causing any leakage. By performing a machining process on the above mentioned parts, and by adding a thin (rubber) film into the Victaulic type coupling area groove, the tolerances due to casting and surface coating can be controlled. This is important in order to achieve rigid coupling, and to control the compression of the gasket 37 between the first and second parts, as shown in Figure 9.

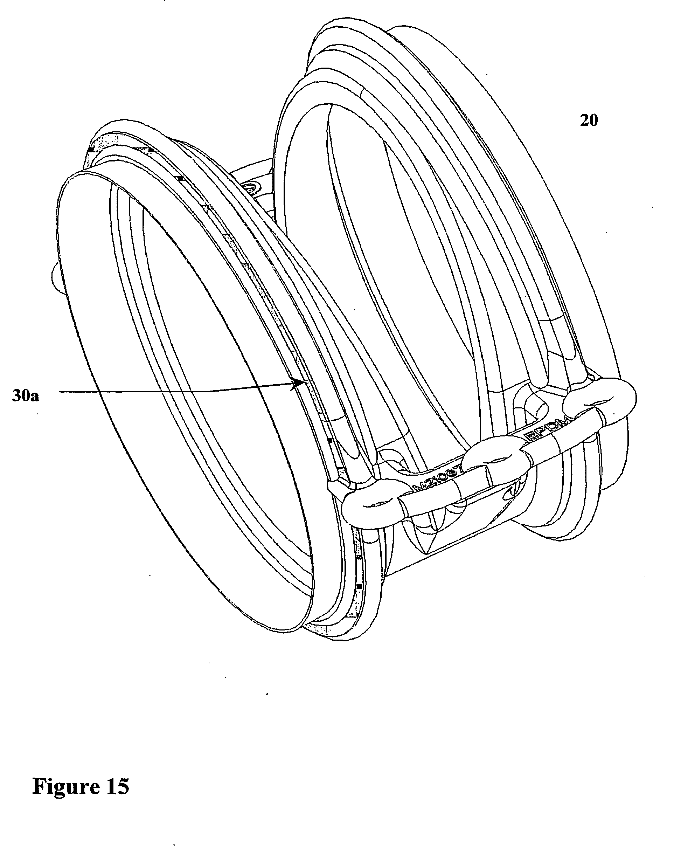

Figure 14 shows an embodiment of the skeleton ring 30, having an area 30a generally facing and in some instances abutting against a region of the first part 10 when the skeleton ring is assembled in the valve body. A similar configuration is shown in figure 8. The skilled person will understand that this area 30a essentially forms a ring, part of which will face and in some instances abutting against also the second part 12 when the skeleton ring is assembled in the valve body. This ring shaped area 30a is also illustrated in figure 15. The area 30a of the skeleton ring will not be exposed to the water flowing through the valve. As stated above, the skeleton ring could be made of a polymer material with glass fibre reinforcement. This material will, however, not come into contact with the water in the valve.

In figure 15, the sealing insert is shown in an embodiment similar to that of figure 14, but in an unassembled state. The exposed skeleton ring area, which is concealed when the insert is mounted in the gate valve, is indicated by the reference numeral 30a. It is understood that a similar area is exposed on the other side of the insert.

In addition, certain smaller areas of the skeleton ring may remain not covered by resilient material after the manufacturing process is completed (e.g. due to fabrication methods and limitations). These smaller non-covered areas may thus be exposed to water when the valve is in use. However, the sizes of these exposed areas of skeleton ring material are small and within the regulatory limits.

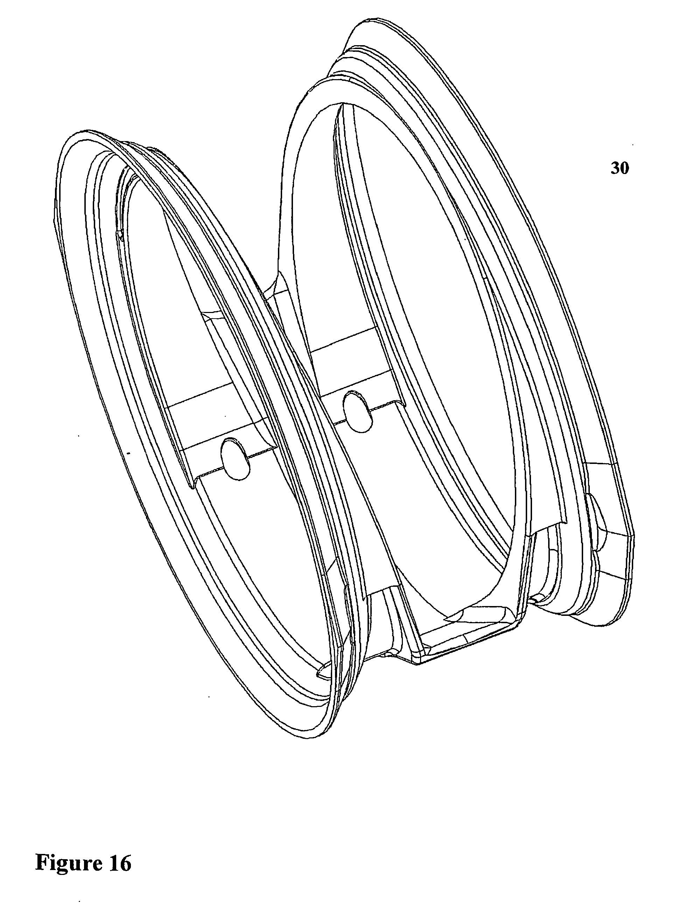

Figure 16 shows the skeleton ring 16. As mentioned above, the skeleton ring may be made of hard materials such as a polyamide material or a polyester based material. In general, however, the skeleton ring may be made of metal, plastic or rubber.

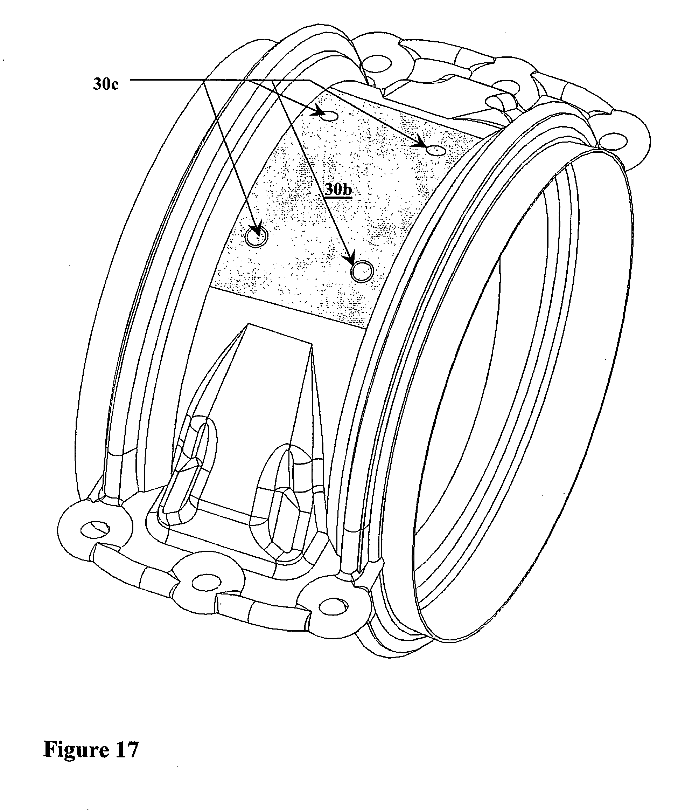

Figure 17 shows the insert of figure 15 from another perspective. Here, a portion 30b of the skeleton ring is shown along with guiding recesses 30c used when the skeleton ring is coated with the softer material, i.e. when manufacturing the sealing insert. The skilled reader will understand that water flowing through the valve body will not be exposed to the area 30b of the skeleton ring.

The invented sealing insert (20) is thus adapted for assembly into a cavity formed by the first part and the second part of the gate valve. The rigid skeleton (30) element is covered by a resilient material to such an extent that the areas of the sealing insert which under normal operating conditions are exposed to the water flowing through the valve, are substantially covered by said resilient material.

One or more of the sealing areas (29), wedge sealing (35), gaskets (31, 36, 37), static sealing (32) are formed or comprised by the resilient material.

The skeleton may be made of a metal, a plastic or a rubber material. The metal may be materials such as cast iron or steel.

The resilient material may be made of a plastic or a rubber material, e.g. a thermoplastic elastomer (TPE).

The resilient material may comprise a plastic which is vulcanised onto the skeleton, this is suitable if the skeleton comprises iron. The resilient material may also be attached to the skeleton by means of an adhesive, as generally known in the art.

The resilient material may also be attached to the skeleton by means of bonding on a molecular level.

The following combinations may be applicable:
- Metal skeleton + TPE coating
- Metal skeleton + rubber coating
- Plastic skeleton + TPE coating
- Plastic skeleton + rubber coating
- Hard rubber skeleton + TPE
- Hard rubber skeleton + rubber coating

Advantages with the metal skeleton / rubber coating combination include well proved manufacturing process, reliable result, extended service life. This material combination requires a primer, however, which is undesirable. Furthermore, the materials and manufacturing process is comparatively expensive.

The manufacturing process for the plastic skeleton / TPE coating combination is more straightforward. No primer is required and the price for the finished product is comparatively low. There is, however, limited experience data available for this combination.

The plastic skeleton / rubber coating combination will also require a primer, which is a disadvantage.

As shown in figure 14, a region of the rigid skeleton faces a region of the first part 10 when the skeleton ring is assembled in the valve body, such that this region 30a of rigid material (often comprising glass fibre, as stated above) will not be exposed to the water flowing through the valve during normal operation and use of the valve.

Referring to figure 8, it is evident how in one embodiment a part 51 of resilient insert material is clamped between first mating regions of one or both of the first part 10 and the second part 12, and one or both of the inlet- and outlet parts 14, whereby a mechanical coupling area 51 is generated when the valve is in an assembled state. Also, still with reference to figure 8, a part of the insert comprising a region of the rigid skeleton which is at least partially covered by the resilient material, may in one embodiment be clamped between second mating regions of one or both of the first part 10 and the second part 12, and one or both of the inlet- and outlet parts 14, whereby a coupling sealing area 52 is generated when the valve is in an assembled state. The mechanical coupling area 51 and the coupling sealing area 52 are resiliently connected. It is evident from figure 8, how the first and second mating regions comprise complementary recessed and raised areas.

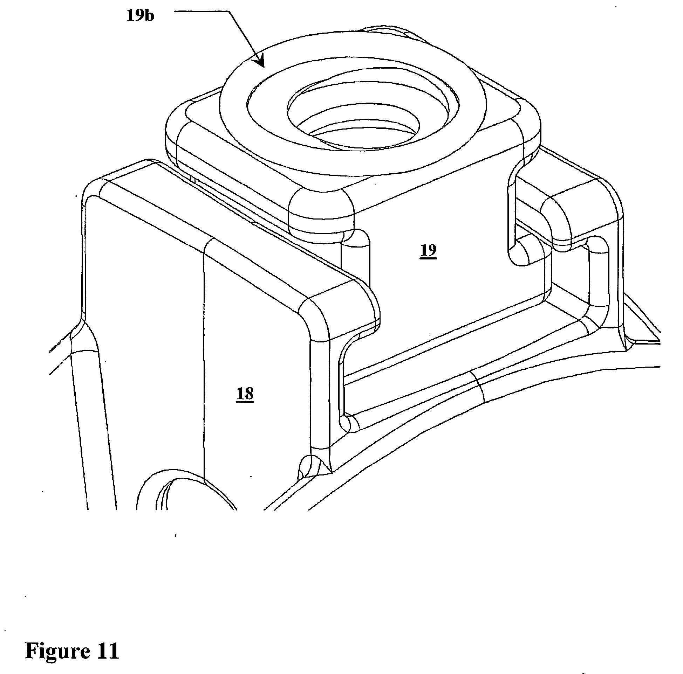

Turning now to the wedge 18, shown in one embodiment in Figure 10, such wedge may be made in an epoxy coated cast iron grade, or in a corrosion free material such as stainless steel, when using an insert to connect the inlet and outlet parts during assembly or by using a rubber coated second (bottom) part as explained above. As the wedge no longer is rubber coated, the sealing functionality in a fully open position, e.g. when repacking the valve under pressure, is no longer present. This could be made possible by extending the wedge nut above the wedge and add a wedge nut sealing ring, as indicated in Figure 10. Here, a wedge nut 19 is disposed on top of a wedge 18, and a sealing ring 19b is indicated at the top of the nut. An enlarged view of this area is shown in fig. 11.

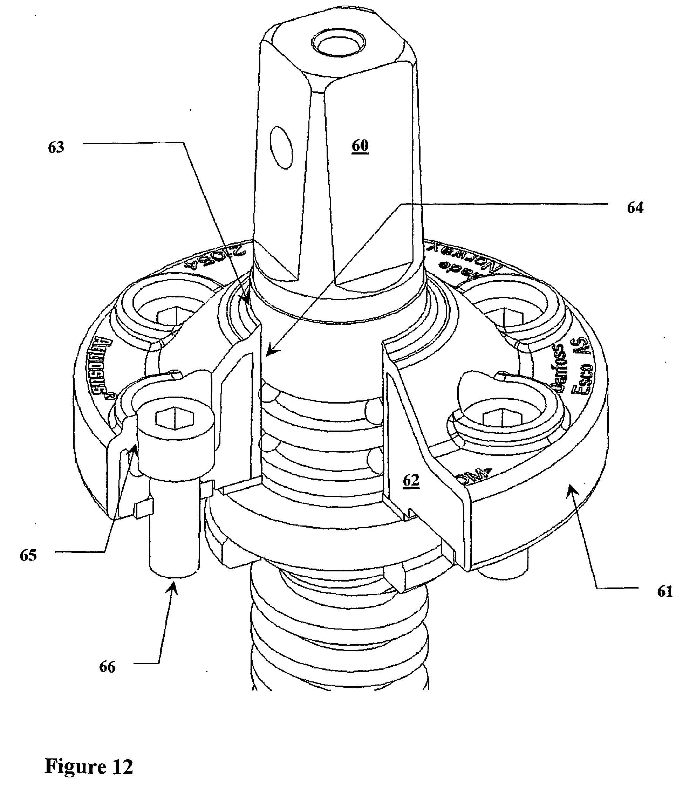

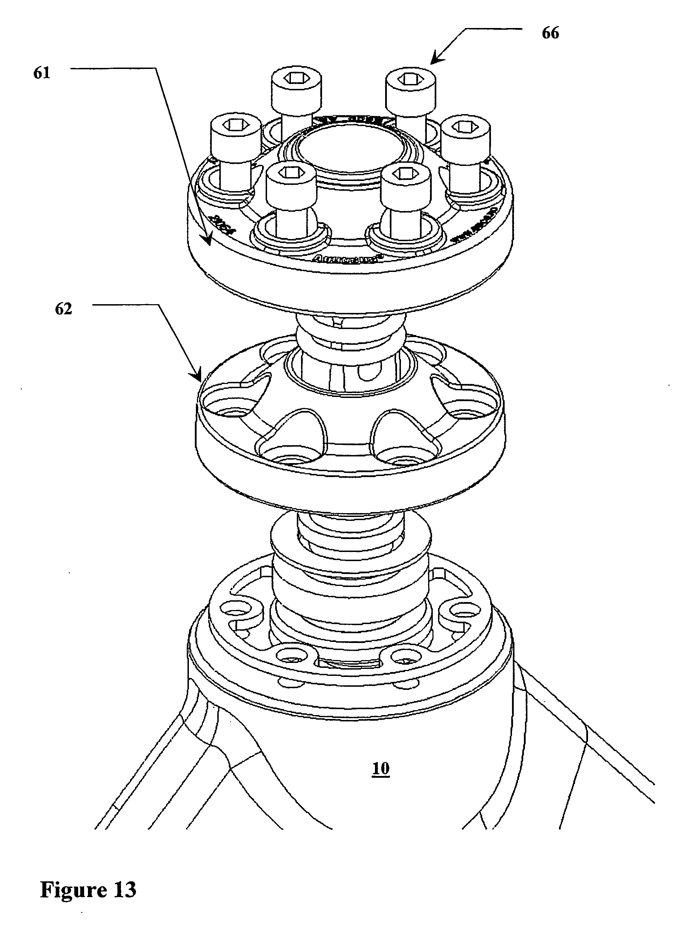

Turning now to Figures 12 and 13, a portion of the valve is disclosed. In order to reduce the number of parts and provide an optimised assembly process, a number of new features pertaining to the valve top are introduced. In order to insure a high strength, the valve top core part 62 is made of e.g. stainless steel, as in the stem 60. The core 62 is covered by a polymer coating 61, which includes a dust seal 63 bearing against the stem 60. It also includes a bearing surface 64 for the stem and a polymer protection film 65 below the bolts 66 in order to avoid metal-to-metal contact with the core (stainless steel) 62. This polymer protection film creates a larger flexibility in the selection of bolt material, without creating any associated problems regarding galvanic corrosion.

By using a polymer protection film, the stainless steel core could be made as a raw casting part at a low price, and the final product would yet obtain an acceptable finish. It is an added advantage, if the polymer material coating has a total adhesion to the stainless steel core. One advantage of this valve top is that it may easily be assembled and reassembled several times, in contrast to the known valve tops where the valve top packing box may be difficult to disassemble.

## Claims

1. A gate valve having a body comprising a first part (10), a second part (12), and inlet-and outlet parts (14),
• said first (10) and second (12) parts, when assembled, together defining an inlet and an outlet in communication with a cavity formed by said assembled first and second parts;
• said inlet and outlet being in fluid communication with respective openings in the inlet- and outlet parts (14), and
• a wedge (18) movable in said body, into said cavity for forming a barrier in said cavity, thereby preventing fluid flow through the body, and out of said cavity for allowing said fluid flow,
**characterized in that**
the first part (10) comprises integral guiding objects (22) disposed on generally opposite sides of the wedge and having respective portions (23) extending into a region of said cavity defined by the second part when the first and second parts are in the assembled state, thus bridging a respective gap between the first and second parts and essentially overlapping respective areas of said second part, thereby ensuring continuous guiding paths for the wedge.

2. A gate valve having a body comprising a first part (10), a second part (12), and inlet-and outlet parts (14),
• said first (10) and second (12) parts, when assembled, together defining an inlet and an outlet in communication with a cavity formed by said assembled first and second parts;
• said inlet and outlet being in fluid communication with respective openings in the inlet- and outlet parts (14), and
• a wedge (18) movable in said body, into said cavity for forming a barrier in said cavity, thereby preventing fluid flow through the body, and out of said cavity for allowing said fluid flow,
**characterized by**
two separate and releasable guiding objects (22') accommodated in the first part (10) and disposed on generally opposite sides of the wedge, for guiding said wedge movement, wherein each guiding object (22') comprises a respective portion (23') extending into a region of said cavity defined by the second part, thus bridging a respective gap between the first and second parts and essentially overlapping respective areas of said second part, thereby ensuring continuous guiding paths for the wedge.

3. The gate valve of claims 1 or 2, wherein each guiding object (22; 22') comprises a respective recess (24; 24') adapted for slidingly guiding said wedge (18).

4. The gate valve of claim 2, wherein the first part comprise grooves (26) for accommodating respective guiding objects (22').

5. The gate valve of claim 2, wherein the second part comprises grooves (27) for accommodating respective portions (23') of the guiding objects.

6. The gate valve of claims 1 or 2, wherein a sealing insert (20) is disposed in said cavity for sealing engagement with parts of the wedge (18) when said wedge is in the position for preventing fluid flow through said valve body.

7. The gate valve of claim 6, wherein said sealing insert comprises a resilient material at least in the area of contact with said wedge.

8. The gate valve of claims 1 or 2, wherein the second part (12) comprises a resilient material at least in the area of contact with said wedge.

9. The gate valve of claims 1 or 2, wherein the second part (12) comprises a resilient material at least in the vicinity of the area of contact with the guiding object (22; 22').

10. The gate valve of claim 8, wherein the second part comprises respective sealing areas (29) for sealing engagement with said inlet- and outlet parts.

11. The gate valve of claim 3, wherein said wedge (18) comprises wedge fins (17) for sliding engagement with said guiding object recesses (24; 24').

## Patentansprüche

1. Schieberventil mit einem einen ersten Teil (10), einen zweiten Teil (12) und Einlass- und Auslassteile (14) aufweisenden Körper, wobei
- die ersten (10) und zweiten (12) Teile, wenn montiert, gemeinsam einen Einlass und einen Auslass in Verbindung mit einem durch die montierten ersten und zweiten Teile gebildeten Hohlraum umgeben;
- der Einlass und der Auslass in Flüssigkeitsverbindung mit entsprechenden Öffnungen in den Einlass- und Auslassteilen (14) sind, und
- ein Keil (18) im Körper beweglich angeordnet ist, und zwar in den Hohlraum hinein zur Bildung eines Stegs im Hohlraum zur Verhinderung eines Flüssigkeitsdurchflusses durch den Körper und aus dem Hohlraum hinaus zur Ermöglichung dieses Flüssigkeitsdurchflusses,
**dadurch gekennzeichnet, dass**
der erste Teil (10) eingebaute Führungsobjekte (22) aufweist, die hauptsächlich an gegenüberliegenden Seiten des Keils angeordnet sind und respektive Portionen (23) aufweisen, die sich in einen Bereich des Hohlraumes erstrecken, der vom zweiten Teil abgegrenzt wird, wenn der erste und der zweite Teil in einem montierten Zustand sind, und **dadurch** einen respektiven Spalt zwischen dem ersten und dem zweiten Teil überbrücken und im wesentlichen respektive Bereiche des zweiten Teils überlappen, wobei ununterbrochene Führungswege für den Keil gesichert sind.

2. Schieberventil mit einem einen ersten Teil (10), einem zweiten Teil (12) und Einlass- und Auslassteile (14) aufweisenden Körper, wobei
- die ersten (10) und zweiten (12) Teile, wenn montiert, gemeinsam einen Einlass und einen Auslass in Verbindung mit einem durch die montierten ersten und zweiten Teile gebildeten Hohlraum umgeben;
- der Einlass und der Auslass in Flüssigkeitsverbindung mit entsprechenden Öffnungen in den Einlass- und Auslassteilen (14) sind, und
- ein Keil (18) im Körper beweglich angeordnet ist, und zwar in den Hohlraum hinein zur Bildung eines Stegs im Hohlraum zur Verhinderung eines Flüssigkeitsdurchflusses durch den Körper und aus dem Hohlraum hinaus zur Ermöglichung dieses Flüssigkeitsdurchflusses,
**gekennzeichnet durch**
zwei separate und lösbare, im ersten Teil (10) und hauptsächlich an gegenüberliegenden Seiten des Keils angeordnete, Führungsobjekte (22') zur Führung der Keilbewegung, wobei jedes Führungsobjekt (22') eine respektive Portion (23') aufweist, die die sich in einen Bereich des Hohlraumes erstreckt, der vom zweiten Teil abgegrenzt wird, und **dadurch** einen respektiven Spalt zwischen dem ersten und dem zweiten Teil überbrücken und im wesentlichen respektive Bereiche des zweiten Teils überlappen, wobei ununterbrochene Führungswege für den Keil gesichert sind.

3. Schieberventil nach Anspruch 1 oder 2, in dem jedes Führungsobjekt (22; 22') eine respektive Ausnehmung (24; 24') aufweist, die zur gleitenden Führung des Keils (18) vorgesehen ist.

4. Schieberventil nach Anspruch 2, in dem der erste Teil Nuten (26) zur Aufnahme respektiver Portionen (23') der Führungsobjekte aufweist.

5. Schieberventil nach Anspruch 2, in dem der zweite Teil Nuten (27) zur Aufnahme respektiver Portionen (23') der Führungsobjekte aufweist.

6. Schieberventil nach Anspruch 1 oder 2, in dem ein Dichtungseinsatz (20) zum dichtenden Eingriff mit Teilen des Keils (18), wenn der Keil in der Position zur Verhinderung eines Durchflusses durch den Ventilkörper ist, im Hohlraum angeordnet ist.

7. Schieberventil nach Anspruch 6, in dem der Dichtungseinsatz ein flexibles Material aufweist, zumindest in dem Bereich, der mit dem Keil in Verbindung ist.

8. Schieberventil nach Anspruch 1 oder 2, in dem der zweite Teil (12) ein flexibles Material aufweist, zumindest in dem Bereich, der mit dem Keil in Verbindung ist.

9. Schieberventil nach Anspruch 1 oder 2, in dem der zweite Teil (12) ein flexibles Material aufweist, zumindest in der Nähe des Bereiches, der mit dem Führungsobjekt (22; 22') in Verbindung ist.

10. Schieberventil nach Anspruch 8, in dem der zweite Teil respektive Dichtungsbereiche (29) zum dichtenden Eingriff mit den Einlass- und Auslassteilen aufweist.

11. Schieberventil nach Anspruch 3, in dem der Keil (18) Keilvorsprünge (17) zum gleitenden Eingriff mit den Führungsobjektnuten (24; 24') aufweist.

## Revendications

1. Robinet-vanne possédant un corps comprenant une première partie (10), une seconde partie (12), et des parties d'entrée et de sortie (14),
- lesdites première (10) et seconde (12) parties, lorsqu'elles sont assemblées, définissant ensemble une entrée et une sortie en communication avec une cavité formée par lesdites première et seconde parties assemblées ;
- lesdites entrée et sortie étant en communication fluide avec des ouvertures respectives dans les parties d'entrée et de sortie (14), et
- une cale (18) mobile dans ledit corps, dans ladite cavité pour former une barrière dans ladite cavité, empêchant ainsi un écoulement de fluide à travers le corps, et hors de ladite cavité pour permettre ledit écoulement de fluide,
**caractérisé en ce que**
la première partie (10) comprend des objets de guidage intégrés (22) disposés sur des côtés généralement opposés de la cale et possédant des parties respectives (23) s'étendant dans une région de ladite cavité définie par la seconde partie lorsque les première et seconde parties sont dans l'état assemblé, enjambant ainsi un espace respectif entre les première et seconde parties et chevauchant essentiellement des zones respectives de ladite seconde partie, garantissant ainsi des passages de guidage continus pour la cale.

2. Robinet-vanne possédant un corps comprenant une première partie (10), une seconde partie (12), et des parties d'entrée et de sortie (14),
- lesdites première (10) et seconde (12) parties, lorsqu'elles sont assemblées, définissant ensemble une entrée et une sortie en communication avec une cavité formée par lesdites première et seconde parties assemblées ;
- lesdites entrée et sortie étant en communication fluide avec des ouvertures respectives dans les parties d'entrée et de sortie (14), et
- une cale (18) mobile dans ledit corps, dans ladite cavité pour former une barrière dans ladite cavité, empêchant ainsi un écoulement de fluide à travers le corps, et hors de ladite cavité pour permettre ledit écoulement de fluide,
**caractérisé par**
deux objets de guidage séparés et libérables (22') logés dans la première partie (10) et disposés sur des côtés généralement opposés de la cale, pour guider ledit mouvement de cale, dans lequel chaque objet de guidage (22') comprend une partie respective (23') s'étendant dans une région de ladite cavité définie par la seconde partie, enjambant ainsi un espace respectif entre les première et seconde parties et chevauchant essentiellement des zones respectives de ladite seconde partie, garantissant ainsi des passages de guidage continus pour la cale.

3. Robinet-vanne selon les revendications 1 ou 2, dans lequel chaque objet de guidage (22 ; 22') comprend un évidement respectif (24 ; 24') adapté pour guider ladite cale (18) de façon coulissante.

4. Robinet-vanne selon la revendication 2, dans lequel la première partie comprend des rainures (26) pour loger des objets de guidage respectifs (22').

5. Robinet-vanne selon la revendication 2, dans lequel la seconde partie comprend des rainures (27) pour loger des parties respectives (23') des objets de guidage.

6. Robinet-vanne selon les revendications 1 ou 2, dans lequel une pièce rapportée d'étanchéité (20) est disposée dans ladite cavité pour entrer en prise d'étanchéité avec des parties de la cale (18) lorsque ladite cale est dans la position pour empêcher l'écoulement de fluide à travers ledit corps de robinet-vanne.

7. Robinet-vanne selon la revendication 6, dans lequel ladite pièce rapportée d'étanchéité comprend un matériau élastique au moins dans la zone de contact avec ladite cale.

8. Robinet-vanne selon les revendications 1 ou 2, dans lequel la seconde partie (12) comprend un matériau élastique au moins dans la zone de contact avec ladite cale.

9. Robinet-vanne selon les revendications 1 ou 2, dans lequel la seconde partie (12) comprend un matériau élastique au moins dans le voisinage de la zone de contact avec l'objet de guidage (22 ; 22').

10. Robinet-vanne selon la revendication 8, dans lequel la seconde partie comprend des zones d'étanchéité respectives (29) pour entrer en prise d'étanchéité avec lesdites parties d'entrée et de sortie.

11. Robinet-vanne selon la revendication 3, dans lequel ladite cale (18) comprend des ailettes de cale (17) pour entrer en prise coulissante avec lesdits évidements d'objet de guidage (24 ; 24').
